# EUROPEAN PATENT APPLICATION

(11) **EP 2 797 278 A1**
(43) Date of publication of application: **29.10.2014**
(21) Application number: 12880296.4
(22) Date of filing: 04.07.2012
(51) Int. Cl.: H04L 29/06

(54) **ANTI-VIRUS METHOD AND APPARATUS AND FIREWALL DEVICE**

(71) Applicant: Huawei Technologies Co., Ltd, Shenzhen, Guangdong 518129 (CN)
(72) Inventor: ZHAO, Jiwei, Shenzhen Guangdong 518129 (CN); JIANG, Wu, Shenzhen Guangdong 518129 (CN); LI, Shiguang, Shenzhen Guangdong 518129 (CN); CHEN, Zhigang, Shenzhen Guangdong 518129 (CN)
(74) Representative: Thun, Clemens
(86) International application number: PCT/CN2012/078181
(87) International publication number: WO 2014/005303

(57) **Abstract**

The present invention provides an anti-virus method and apparatus and a firewall device. The method includes: receiving, by a first thread, data packets belonging to the same data stream and transmitted in a network, and sequentially buffering payload data of data packets bearing file content among the received data packets into a first queue; reading, by a second thread, payload data of at least one data packet from a start position of the first queue, and determining, according to the read payload data, whether payload data in the first queue is file content of a compressed file; if it is determined that the payload data in the first queue is the file content of the compressed file, identifying a compressed format of the compressed file; querying a decompression algorithm corresponding to the identified compressed format from a mapping between a compressed format and a decompression algorithm; by using the queried decompression algorithm, reading payload data of data packets one by one from the first queue, and performing decompression processing separately on payload data that is read each time; and performing anti-virus detection separately on file content that is obtained after each time of decompression processing.

## Description

### TECHNICAL FIELD

The present invention relates to computer technologies, and in particular, to an anti-virus (Anti-Virus; AV for short) method and apparatus and a firewall device.

### BACKGROUND

People are increasingly dependent on networks, so network security becomes more and more important. At present, a firewall device becomes an indispensable device for network security. The firewall device refers to a special network interconnection device used for enhancing access control between networks, preventing an external network user from accessing an internal network resource by entering an internal network through an external network in an illegal manner, and protecting an internal network operation environment.

In the prior art, the firewall device provides a function of AV detection, which is used for performing threat detection on a file transmitted in a network, so as to determine whether a virus exists in the file. In addition, the main principle of the AV detection is: first determining whether a file transmitted in the network is in a compressed format, if the transmitted file is a compressed file, after payload data of all data packets bearing the file is buffered, reassembling the buffered payload data of the data packets to generate an entire compressed file, then performing decompression processing on the compressed file, and performing virus scanning on the decompressed file.

However, in the AV detection, when the file type of a file is the compressed format, a payload part of all data packets bearing the file in the compressed format needs to be buffered first, and only after the buffered payload part of the data packets is reassembled to generate the entire compressed file, decompression processing can be performed on the generated compressed file, and then virus scanning is performed on the uncompressed file obtained through decompression. That is to say, virus scanning cannot be executed until the uncompressed file is obtained, which causes a problem of low processing performance of the AV detection.

### SUMMARY

The present invention provides an anti-virus method and apparatus and a firewall device, so as to solve the problem of low processing performance caused by performing AV detection on a file of a compressed format in the prior art.

In a first aspect, an anti-virus method is provided, which includes:
receiving, by a first thread, data packets belonging to the same data stream and transmitted in a network, and sequentially buffering payload data of data packets bearing file content among the received data packets into a first queue;
reading, by a second thread, payload data of at least one data packet from a start position of the first queue, and determining, according to the read payload data, whether payload data in the first queue is file content of a compressed file;
identifying, by the second thread, a compressed format of the compressed file, if it is determined that the payload data in the first queue is the file content of the compressed file; and
querying, by the second thread, a decompression algorithm corresponding to the identified compressed format from a mapping between a compressed format and a decompression algorithm; by using the queried decompression algorithm, reading payload data of data packets one by one from the first queue, and performing decompression processing separately on payload data that is read each time; and performing anti-virus detection separately on file content that is obtained after each time of decompression processing.

In a first possible implementation manner of the first aspect, the reading, by the second thread, the payload data of the at least one data packet from the start position of the first queue includes:
when a preset condition is met, reading, by the second thread, the payload data of the at least one data packet from the start position of the first queue, where the preset condition includes that the second thread is idle and payload data of at least a preset quantity of data packets exists in the first queue.

In combination with the first aspect or the first possible implementation manner of the first aspect, in a second possible implementation manner of the first aspect, before the sequentially buffering the payload data of the data packets bearing the file content among the received data packets into the first queue, the method further includes:
obtaining content of a preset feature field in a packet header part of the data packet, comparing the obtained content of the preset feature field with a preset value, and if consistent, determining that the data packet bears file content.

In combination with the first aspect or the first possible implementation manner of the first aspect, in a third possible implementation manner of the first aspect, the determining, according to the read payload data, whether payload data in the first queue is the file content of the compressed file includes:
determining, by the second thread, whether a specified position of the read payload data includes a file name; and
if the file name is included, determining whether a preset extension set of the compressed file includes an extension of the file name, and if the extension set of the compressed file includes the extension of the file name, determining that the payload data in the first queue is the file content of the compressed file.

In combination with the first aspect, in a fourth possible implementation manner of the first aspect, the performing the decompression processing separately on the payload data that is read each time includes:
according to the queried decompression algorithm and structural parameter information of the file, performing decompression processing separately on payload data that is read each time, where
an obtaining manner of the structural parameter information includes:
   reading, according to an identifier of a first packet, payload data of the first packet from the first queue, and obtaining, from the read payload data, structural parameter information carried in a file header, where the identifier of the first packet is obtained by performing protocol parsing on the data packet before the payload data of the data packet is sequentially buffered into the first queue.

In combination with the first aspect, in a fifth possible implementation manner of the first aspect, after the performing the anti-virus detection separately on the file content that is obtained after each time of the decompression processing, the method further includes:
sequentially buffering, by the second thread, a detection result of each time of anti-virus detection into a second queue; and
determining, by a third thread according to the detection result in the second queue, whether a file transmitted in the data stream is a virus file.

In a second aspect, an anti-virus apparatus is provided, which includes: a first execution module, a second execution module and a buffer module, where the first execution module includes:
a receiving unit, configured to receive data packets belonging to the same data stream and transmitted in a network; and
a buffer unit, configured to sequentially buffer payload data of data packets bearing file content among the data packets received by the receiving unit into a first queue in the buffer module; and
the second execution module includes:
   a read unit, configured to, when a preset condition is met, read payload data of at least one data packet from a start position of the first queue;
   a determination unit, configured to determine, according to the payload data read by the read unit, whether payload data in the first queue is file content of a compressed file;
   an identification unit, configured to identify a compressed format of the compressed file, if the determination unit determines that the payload data in the first queue is the file content of the compressed file;
   a decompression unit, configured to query a decompression algorithm corresponding to the identified compressed format from a mapping between a compressed format and a decompression algorithm; and by using the queried decompression algorithm, read payload data of data packets one by one from the first queue, and perform decompression processing separately on payload data that is read each time; and
   a detection unit, configured to perform anti-virus detection separately on file content that is obtained after each time of decompression processing of the decompression unit.

In a first possible implementation manner of the second aspect, the buffer unit is specifically configured to obtain content of a preset feature field in a packet header part of the data packet, compare the obtained content of the preset feature field with a preset value, and if consistent, determine that the data packet bears file content, and sequentially buffer the payload data of the data packets bearing the file content into the first queue.

In combination with the second aspect or the first possible implementation manner of the second aspect, in a second possible implementation manner of the second aspect, the determination unit is specifically configured to determine whether a specified position of the read data includes a file name;
if the file name is included, determine whether a preset extension set of the compressed file includes an extension of the file name, and if the extension set of the compressed file includes the extension of the file name, determine that the payload data in the first queue is the file content of the compressed file.

In combination with the second aspect, in a third possible implementation manner of the second aspect, the decompression unit is specifically configured to query a decompression algorithm corresponding to the identified compressed format from a mapping between a compressed format and a decompression algorithm; by using the queried decompression algorithm, read the payload data of the data packets one by one from the first queue, and according to the queried decompression algorithm and structural parameter information of the file, perform decompression processing separately on payload data that is read each time, where
an obtaining manner of the structural parameter information includes:
reading, according to an identifier of a first packet, payload data of the first packet from the first queue, and obtaining, from the read payload data, structural parameter information carried in a file header, where the identifier of the first packet is obtained by performing protocol parsing on the data packet before the payload data of the data packet is sequentially buffered into the first queue.

In combination with the second aspect or the second possible implementation manner of the second aspect, in a fourth possible implementation manner of the second aspect, the second execution module is further configured to sequentially buffer a detection result of each time of anti-virus detection into a second queue in the buffer module; and
the apparatus further includes:
a third execution module, configured to determine, according to the detection result in the second queue, whether a file transmitted in the data stream is a virus file.

In a third aspect, a firewall device is provided, which includes: a memory, configured to store an instruction; and
a processor, coupled with the memory, where the processor is configured to execute the instruction stored in the memory, and the processor is configured to execute a file anti-virus detection method according to any one of claims 1 to 7.

The technical effects of the present invention are as follows. A first thread receives data packets belonging to the same data stream and transmitted in a network, and sequentially buffers payload data of data packets bearing file content among the received data packets into a first queue; a second thread reads payload data of at least one data packet from a start position of the first queue, and when it is determined, according to the read payload data, that the payload data in the first queue is file content of a compressed file, identifies a compressed format of the compressed file, then queries a decompression algorithm from a mapping between a compressed format and a decompression algorithm, and finally, by using the queried decompression algorithm, reads payload data of data packets one by one from the first queue, and performs decompression processing separately on payload data that is read each time, and performs anti-virus detection separately on file content that is obtained after each time of decompression processing. Multithread collaborative processing may be adopted, decompression processing may be performed separately on the payload data that is read each time, and anti-virus detection may be performed separately on the file content that is obtained after each time of the decompression processing, thereby effectively reducing a buffer amount and improving processing performance of the AV detection.

### BRIEF DESCRIPTION OF DRAWINGS

FIG. 1a is a flow chart of an embodiment of an anti-virus method according to the present invention;
FIG. 1b is a flow chart of another embodiment of an anti-virus method according to the present invention;
FIG. 1c is a flow chart of still another embodiment of an anti-virus method according to the present invention;
FIG. 1d is a flow chart of yet another embodiment of an anti-virus method according to the present invention;
FIG. 1e is a flow chart of yet another embodiment of an anti-virus method according to the present invention;
FIG. 1f is a flow chart of yet another embodiment of an anti-virus method according to the present invention;
FIG. 2 is a schematic structural diagram of a construction on which an anti-virus method provided by an embodiment of the present invention is based;
FIG. 3 is a flow chart of still another embodiment of an anti-virus method according to the present invention;
FIG. 4 is a schematic structural diagram of an embodiment of an anti-virus apparatus according to the present invention; and
FIG. 5 is a schematic structural diagram of another embodiment of the anti-virus apparatus according to the present invention.

### DESCRIPTION OF EMBODIMENTS

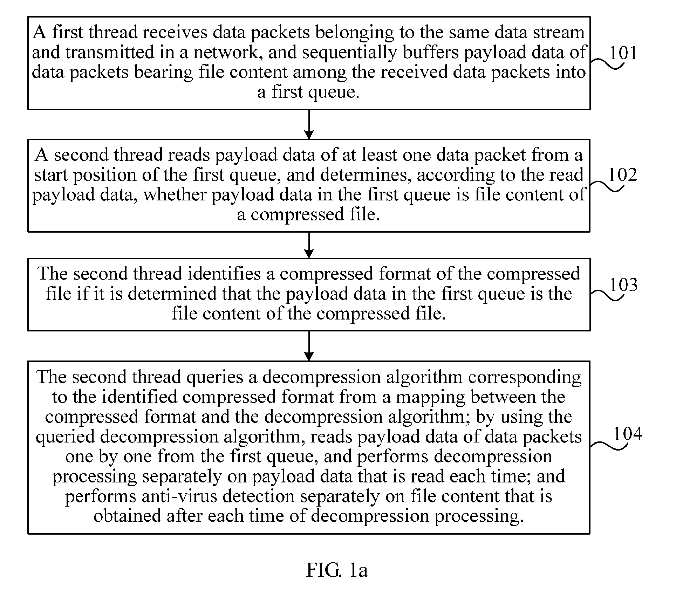

FIG. 1a is a flow chart of an embodiment of an anti-virus method according to the present invention. As shown in FIG. 1a, the method of this embodiment includes:

Step 101: A first thread receives data packets belonging to the same data stream and transmitted in a network, and sequentially buffers payload data of data packets bearing file content among the received data packets into a first queue.

It should be noted that, each data packet has information such as a source port, a destination port, a source IP address, a destination IP address and a protocol type, and the information is referred to as a quintuple. If quintuples of multiple data packets are the same, it is deemed that these data packets belong to the same data stream.

A data packet may bear multiple types of data, such as network management configuration information, a request message and a feedback message between network element devices. For each data packet, the first thread determines whether the data packet bears file content, and if what is borne is file content, sequentially buffers payload data of the data packet into the first queue.

Optionally, the first thread determines whether what the data packet bears is file content in the following manner:
obtaining content of a preset feature field (for example, content-type) in a packet header part of the data packet, comparing the obtained content of the preset feature field with a preset value (for example, txt, doc or xls), if consistent, determining that what the data packet bears is file content, and otherwise, determining that what the data packet bears is not file content.

In addition, it should be further noted that, when the payload data is buffered into the first queue, a data structure is further established for storing a start address and an offset of each data packet stored in the first queue, so that when decompression is performed packet by packet subsequently, payload data of each data packet can be read sequentially by taking the payload data of each data packet as a unit.

Step 102: A second thread reads payload data of at least one data packet from a start position of the first queue, and determines, according to the read payload data, whether payload data in the first queue is file content of a compressed file.

Step 103: The second thread identifies a compressed format of the compressed file if it is determined that the payload data in the first queue is the file content of the compressed file.

Step 104: The second thread queries a decompression algorithm from a mapping between a compressed format and a decompression algorith; by using the queried decompression algorithm, reads payload data of data packets one by one from the first queue, and performs decompression processing separately on payload data that is read each time; and performs anti-virus detection separately on file content that is obtained after each time of decompression processing.

In this embodiment, a first thread receives data packets belonging to the same data stream and transmitted in a network, and sequentially buffers payload data of data packets bearing file content among the received data packets into a first queue; a second thread reads payload data of at least one data packet from a start position of the first queue, and when it is determined, according to the read payload data, that the payload data in the first queue is file content of a compressed file, identifies a compressed format of the compressed file, then queries a decompression algorithm from a mapping between a compressed format and a decompression algorithm, and finally, by using the queried decompression algorithm, reads payload data of data packets one by one from the first queue, and performs decompression processing separately on payload data that is read each time, and performs anti-virus detection separately on file content that is obtained after each time of decompression processing. Multithread collaborative processing may be adopted, decompression processing may be performed separately on the payload data that is read each time, and anti-virus detection may be performed separately on the file content that is obtained after each time of the decompression processing, thereby effectively reducing a buffer amount and improving processing performance of the AV detection.

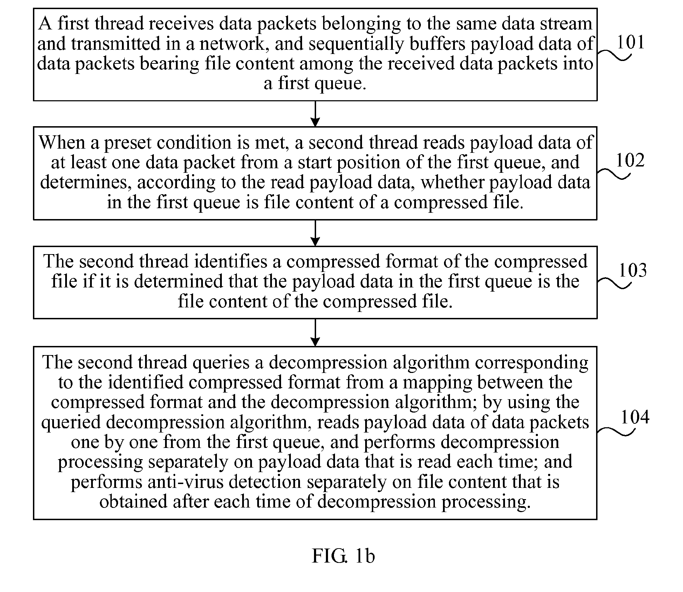

Further, FIG. 1b is a flow chart of another embodiment of an anti-virus method according to the present invention. On the basis of the embodiment shown in FIG. 1a, a specific implementation manner of step 102 is as follows.

When a preset condition is met, the second thread reads the payload data of the at least one data packet from the start position of the first queue, and determines, according to the read payload data, whether the payload data in the first queue is the file content of the compressed file.

Optionally, the preset condition includes that: the second thread is idle and payload data of at least a preset quantity of data packets exists in the first queue. In this manner, a better effect is achieved that payload data of more than one data packet is read by the second thread once, so that read efficiency is improved.

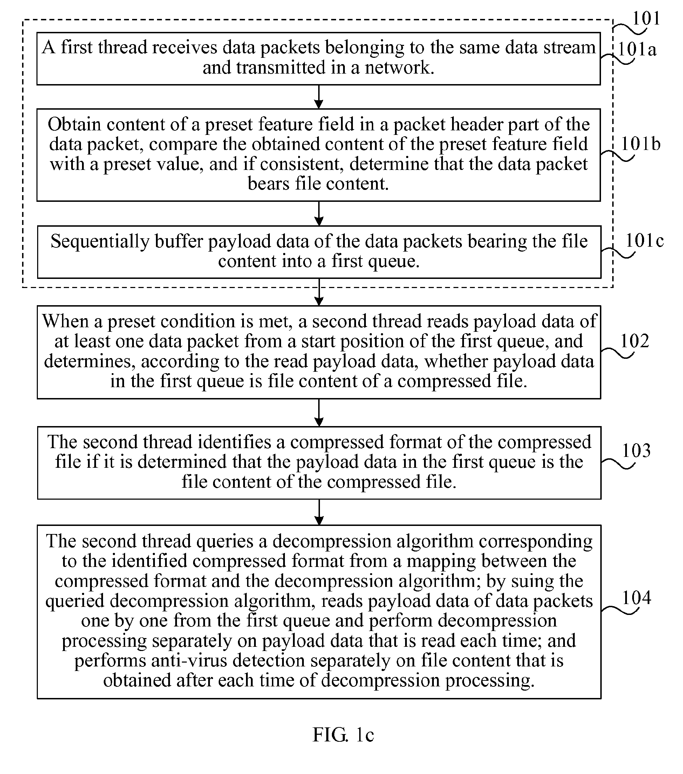

Further, FIG. 1c is a flow chart of still another embodiment of an anti-virus method according to the present invention. On the basis of the embodiment shown in FIG. 1a or FIG. 1b, a specific implementation manner of step 101 is as follows.

Step 101a: The first thread receives the data packets belonging to the same data stream and transmitted in the network.

Step 101b: Obtain the content of the preset feature field in the packet header part of the data packet, compare the obtained content of the preset feature field with the preset value, and if consistent, determine that the data packet bears file content.

Step 101c: Sequentially buffer the payload data of the data packets bearing the file content into the first queue.

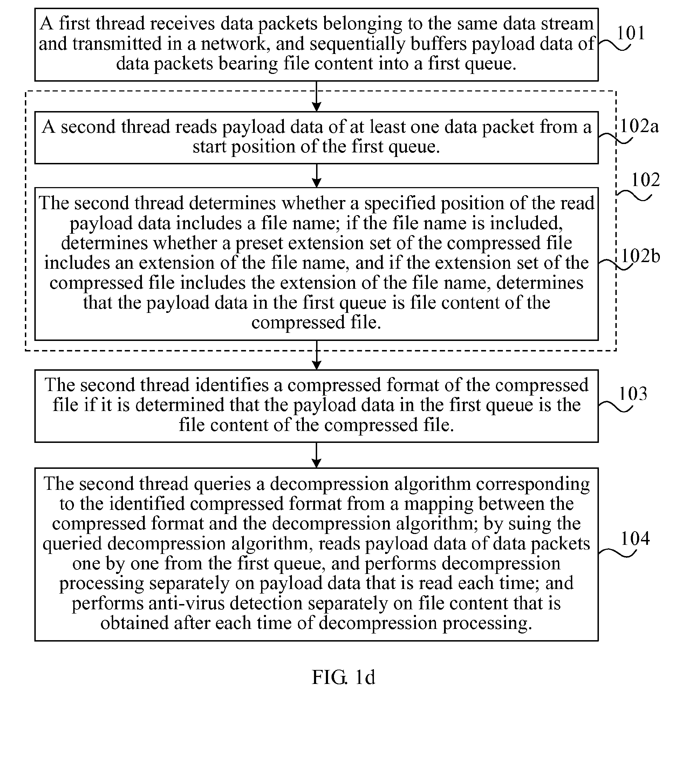

Further, FIG. 1d is a flow chart of yet another embodiment of an anti-virus method according to the present invention. On the basis of the embodiment shown in FIG. 1a or FIG. 1b, a specific implementation manner of step 102 is as follows.

Step 102a: The second thread reads the payload data of the at least one data packet from the start position of the first queue.

Optionally, when a preset condition is met, the second thread reads the payload data of at least one data packet from the start position of the first queue.

Step 102b: The second thread determines whether a specified position of the read payload data includes a file name; if the file name is included, determines whether a preset extension set of a compressed file includes an extension of the file name, and if the extension set of the compressed file includes the extension of the file name, determines that the payload data in the first queue is file content of the compressed file.

In this embodiment, for example, a preset extension name set S of the compressed file is S={rar, gz, zip}, if the file name read by the second thread is test.txt, the extension txt in the file name is not in the set S, so it is determined that the payload data in the first queue is not the file content of the compressed file; and if the file name read by the second thread is test.rar, the extension rar in the file name is in the set S, so it is determined that the payload data in the first queue is the file content of the compressed file.

In addition, optionally, a specific implementation manner for identifying the compressed format of the compressed file is:
using a compressed format corresponding to the extension of the file name as the compressed format of the compressed file. For example, if the file name is test.rar, the compressed format is an RAR (Roshal ARchive) format corresponding to rar.

It should be further noted that, the compressed format in this embodiment supports stream decompression. Specifically, in this embodiment, a mapping between a compressed format and supported stream decompression may be pre-stored. If supported stream decompression corresponding to the compressed format is obtained through querying, it is indicated that the compressed format of the file supports stream decompression; and if the compressed format obtained through query has no corresponding supported stream decompression, it is indicated that the compressed format of the file does not support stream decompression.

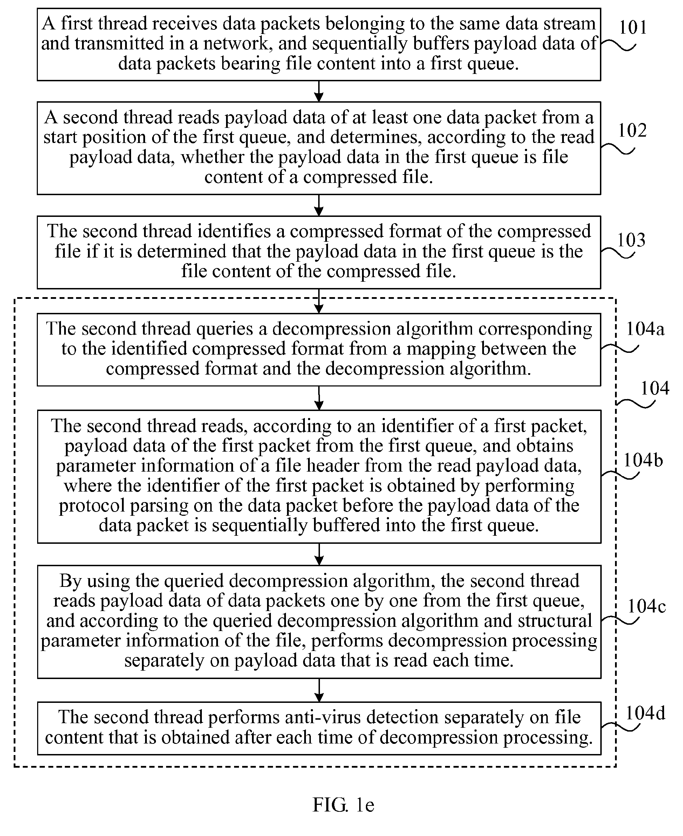

Further, FIG. 1e is a flow chart of still another embodiment of an anti-virus method according to the present invention. On the basis of the embodiment shown in FIG. 1a, a specific implementation manner of step 104 is as follows.

Step 104a: The second thread queries the decompression algorithm corresponding to the identified compressed format from the mapping between a compressed format and a decompression algorithmmapping between a compressed format and a decompression algorithm.

Step 104b: The second thread reads, according to an identifier of a first packet, payload data of the first packet from the first queue, and obtains parameter information of a file header from the read payload data, where the identifier of the first packet is obtained by performing protocol parsing on the data packet before the payload data of the data packet is sequentially buffered into the first queue.

The structural parameter information includes: a physical offset at the beginning of a file and the size of the file, a storage manner of a diagram target, and so on.

Step 104c: By using the queried decompression algorithm, the second thread reads the payload data of the data packets one by one from the first queue, and according to the queried decompression algorithm and structural parameter information of the file, performs the decompression processing separately on the payload data that is read each time.

Step 104d: The second thread performs the anti-virus detection separately on the file content that is obtained after each time of the decompression processing.

In this embodiment, in the same data stream, file content borne in payload data of a first data packet in the data stream is a file header, and through a protocol of the data packet, the file header is parsed, thereby obtaining parameter information, so that decompression processing is performed packet by packet according to the parameter information and a decompression algorithm.

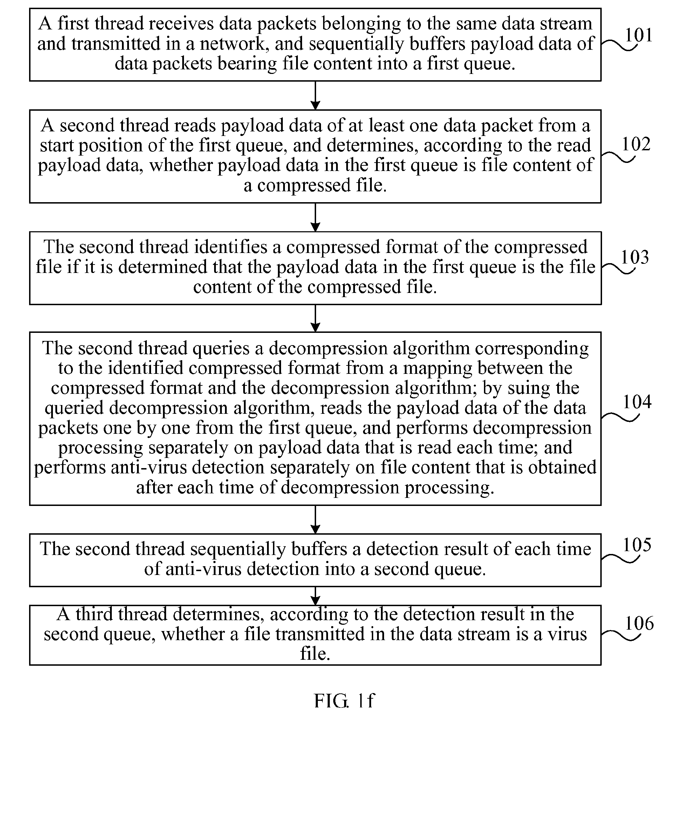

Further, FIG. 1f is a flow chart of another embodiment of an anti-virus method according to the present invention. On the basis of the embodiment shown in FIG. 1a, after step 104, the method may further include:

Step 105: The second thread sequentially buffers a detection result of each time of anti-virus detection into a second queue.

Step 106: A third thread determines, according to the detection result in the second queue, whether a file transmitted in the data stream is a virus file.

For example, two determinations may be adopted to determine whether the file transmitted in the data stream is a virus file, where the first determination refers to that when the second thread performs anti-virus detection separately on each data packet, if feature a, feature b and feature c appear in the payload data at the same time, it is deemed that a threat exists in the payload data. In the second queue, a threat identifier (indicated by 1) is written into a detection result of the data packet, otherwise, in the second queue, a security identifier (indicated by 0) is written into the detection result of the data packet. The second determination refers to that the third thread determines whether a preset verification condition is met according to the quantity and a distribution situation of threat identifiers and security identifiers in the second sequence, where the verification condition includes parameters such as the quantity, proportion and a distribution feature of the threat identifiers. If the preset verification condition is met, it is determined that the file transmitted in the data stream is a virus file, and otherwise, it is determined that the file transmitted in the data stream is not a virus file.

It should be noted that, the embodiments shown in FIG. 1b to FIG. 1f may also be combined for use.

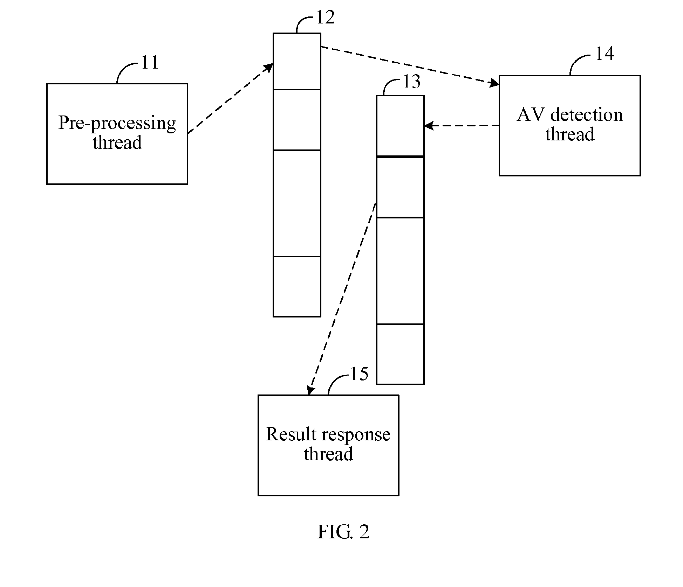

FIG. 2 is a schematic structural diagram of a construction on which an anti-virus method provided by an embodiment of the present invention is based. As shown in FIG. 2, multiple threads work collaboratively, which specifically includes: a pre-processing thread 11 (as the foregoing first thread), a data packet queue 12 (as the foregoing first queue), a result queue 13 (as the foregoing second queue), an AV detection thread 14 (as the foregoing second thread) and a result response thread 15 (as the foregoing third thread).

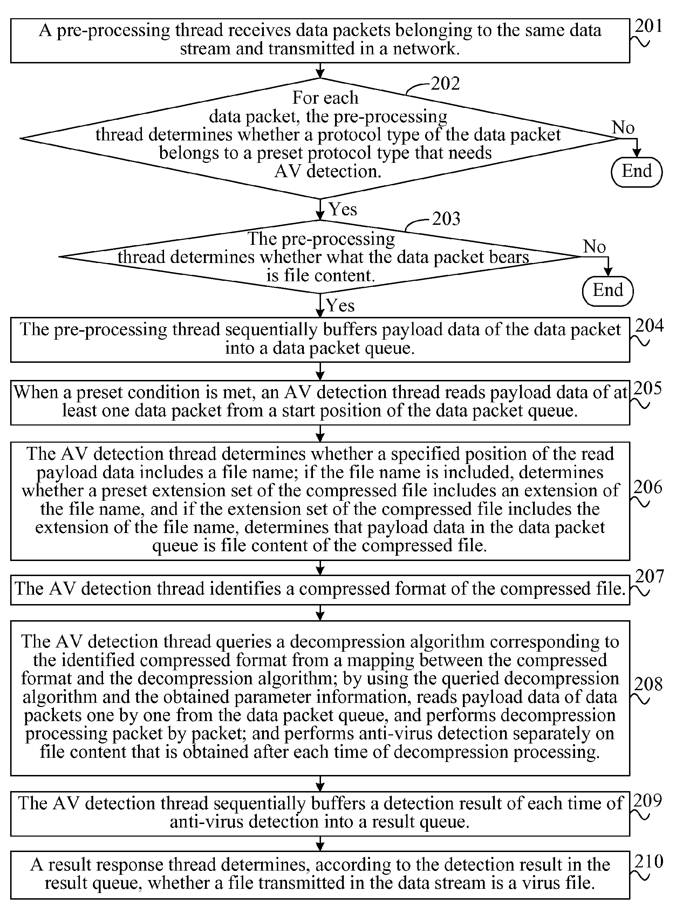

FIG. 3 is a flow chart of still another embodiment of an anti-virus method according to the present invention. On the basis of the embodiment shown in FIG. 2, as shown in FIG. 3, the method of this embodiment includes:

Step 201: A pre-processing thread receives data packets belonging to the same data stream and transmitted in a network.

Step 202: For each data packet, the pre-processing thread determines whether a protocol type of the data packet belongs to a preset protocol type that needs AV detection; if yes, performs step 203; and if not, ends the procedure.

Step 203: The pre-processing thread determines whether what the data packet bears is file content; if yes, performs step 204; and if not, ends the procedure.

Specifically, for a specific manner for determining whether what the data packet bears is the file content, reference is made to related descriptions of step 101 in FIG. 1c, which is not repeated again herein.

Step 204: The pre-processing thread sequentially buffers payload data of the data packet into a data packet queue.

Step 205: When a preset condition is met, an AV detection thread reads payload data of at least one data packet from a start position of the data packet queue.

The preset condition includes but is not limited to that: the AV detection thread is idle, and payload data of at least a preset quantity of data packets exists in the first queue.

Step 206: The AV detection thread determines whether a specified position of the read payload data includes a file name; if the file name is included, determines whether a preset extension set of a compressed file includes an extension of the file name, and if the extension set of the compressed file includes the extension of the file name, determines that payload data in the data packet queue is file content of the compressed file.

Step 207: The AV detection thread identifies a compressed format of the compressed file.

Optionally, a compressed format corresponding to the extension of the file name is used as the compressed format of the compressed file.

Step 208: The AV detection thread queries a decompression algorithm corresponding to the identified compressed format from a mapping between a compressed format and a decompression algorithm; by using the queried decompression algorithm and the obtained parameter information, reads payload data of data packets one by one from the data packet queue, and performs decompression processing packet by packet; and performs anti-virus detection separately on file content that is obtained after each time of decompression processing.

In this embodiment, for a process of obtaining structural parameter information, reference is made to related descriptions in FIG. 1e, which is not repeated again herein.

Step 209: The AV detection thread sequentially buffers a detection result of each time of anti-virus detection into a result queue.

Step 210: A result response thread determines, according to the detection result in the result queue, whether a file transmitted in the data stream is a virus file.

In this embodiment, specifically, the AV detection thread obtains the detection result, and places the detection result into the result queue. In addition, the result response thread reads the detection result from the result queue 13, and performs threat determination and response processing on the detection result.

In this embodiment, a pre-processing thread receives each of data packets belonging to the same data stream and transmitted in a network, and when it is determined that what the data packet bears is file content, sequentially buffers payload data of the data packet into a data packet queue; in addition, when a preset condition is met, an AV detection thread reads payload data of at least one data packet from a start position of the data packet queue, and when it is determined, according to the read payload data, that the payload data in the data packet queue is file content of a compressed file, identifies a compressed format of the compressed file, then queries a decompression algorithm corresponding to the identified compressed format from a mapping between a compressed format and a decompression algorithm, by using the queried decompression algorithm and parameter information, reads payload data of data packets one by one from the data packet queue, and performs decompression processing packet by packet, and performs anti-virus detection separately on the file content that is obtained after each time of the decompression processing; and finally, a result response thread determines whether a file transmitted in the data stream is a virus file according to a detection result in the result queue, so that multiple threads are adopted to process the compressed file and perform AV detection, and AV detection performance, network processing performance and user experience are effectively improved.

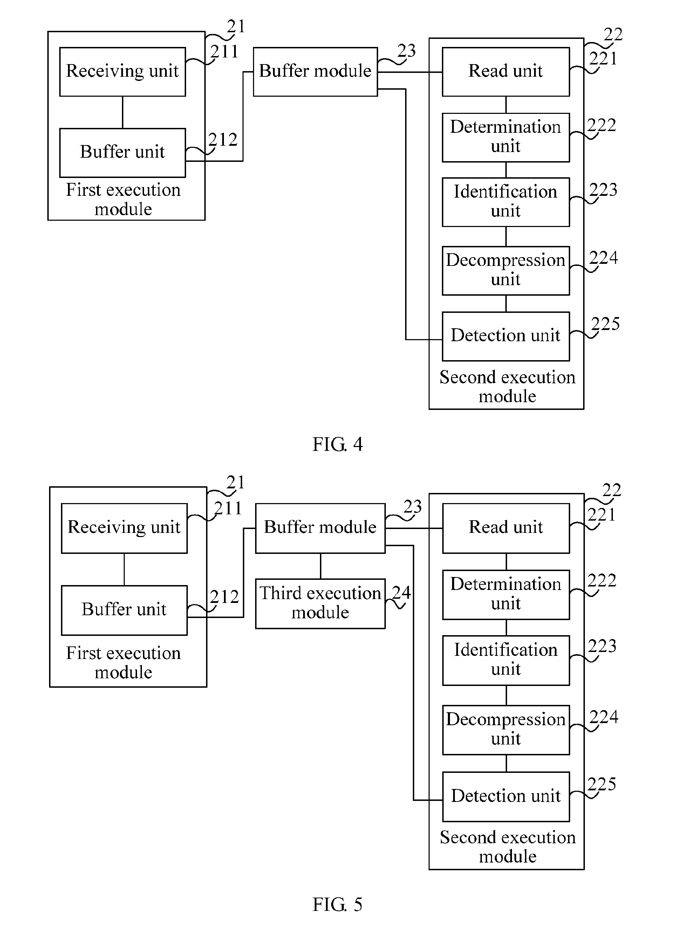

FIG. 4 is a schematic structural diagram of an embodiment of an anti-virus apparatus according to the present invention. As shown in FIG. 4, the apparatus of this embodiment includes: a first execution module 21, a second execution module 22 and a buffer module 23, where the first execution module 21 includes: a receiving unit 211 and a buffer unit 212; and the second execution module 22 includes: a read unit 221, a determination unit 222, an identification unit 223, a decompression unit 224 and a detection unit 225. Specifically, the receiving unit 211 is configured to receive data packets belonging to the same data stream and transmitted in a network; the buffer unit 212 is configured to sequentially buffer payload data of data packets bearing file content among the data packets received by the receiving unit 211 into a first queue in the buffer module 23; the read unit 221 is configured to, when a preset condition is met, read payload data of at least one data packet from a start position of the first queue; the determination unit 222 is configured to, according to the payload data read by the read unit 221, determine whether payload data in the first queue is file content of a compressed file; the identification unit 223 is configured to identify a compressed format of the compressed file, if the determination unit 222 determines that the payload data in the first queue is the file content of the compressed file; the decompression unit 224 is configured to query a decompression algorithm corresponding to the identified compressed format from a mapping between a compressed format and a decompression algorithm; by using the queried decompression algorithm, reads payload data of data packets one by one from the first queue and perform decompression processing separately on payload data that is read each time; and the detection unit 225 is configured to perform anti-virus detection separately on file content that is obtained after each time of decompression processing of the decompression unit 224.

The anti-virus apparatus in this embodiment may execute the technical solution of the method embodiment shown in FIG. 1a. The implementation principles thereof are similar, which are not repeated again herein.

In this embodiment, a first thread receives data packets belonging to the same data stream and transmitted in a network, and sequentially buffers payload data of data packets bearing file content into a first queue; a second thread reads payload data of at least one data packet from a start position of the first queue, and when it is determined, according to the read payload data, that the payload data in the first queue is file content of a compressed file, identifies a compressed format of the compressed file, then queries a decompression algorithm from a mapping between a compressed format and a decompression algorithm, and finally, by using the queried decompression algorithm, reads payload data of data packets one by one from the first queue, and performs decompression processing separately on payload data that is read each time, and performs anti-virus detection separately on file content that is obtained after each time of decompression processing. Multithread collaborative processing may be adopted, decompression processing may be performed separately on the payload data that is read each time, and anti-virus detection may be performed separately on the file content that is obtained after each time of the decompression processing, thereby effectively reducing a buffer amount and improving processing performance of the AV detection.

FIG. 5 is a schematic structural diagram of another embodiment of an anti-virus apparatus according to the present invention. As shown in FIG. 5, on the basis of the embodiment shown in FIG. 4, the buffer unit 212 is specifically configured to obtain content of a preset feature field in a packet header part of the data packet, compare the obtained content of the preset feature field with a preset value, and if consistent, determine that the data packet bears file content, and sequentially buffer the payload data of the data packets bearing the file content into the first queue.

Further, the determination unit 222 is specifically configured to determine whether a specified position of the read data includes a file name; if the file name is included, determine whether a preset extension set of the compressed file includes an extension of the file name, and if the extension set of the compressed file includes the extension of the file name, determine that the payload data in the first queue is the file content of the compressed file.

Further, the decompression unit 224 is specifically configured to query the decompression algorithm corresponding to the identified compressed format from a mapping between a compressed format and a decompression algorithm, by using the queried decompression algorithm, read the payload data of the data packets one by one from the first queue, and according to the queried decompression algorithm and structural parameter information of the file, perform decompression processing on the payload data that is read each time.

An obtaining manner of the structural parameter information includes:
reading, according to an identifier of a first packet, payload data of the first packet from the first queue, and obtaining, from the read payload data, structural parameter information carried in a file header, where the identifier of the first packet is obtained by performing protocol parsing on the data packet before the payload data of the data packet is sequentially buffered into the first queue.

The parameter information includes: a physical offset at the beginning of a file and the size of the file.

Further, the second execution module 22 is further configured to sequentially buffer a detection result of each time of anti-virus detection into a second queue in the buffer module 23.

The apparatus further includes:
a third execution module 24, configured to determine, according to the detection result in the second queue, whether a file transmitted in the data stream is a virus file.

The anti-virus apparatus in this embodiment may execute the technical solutions of the method embodiments shown in any one of FIG. 1a to FIG. 1f, or execute the technical solution of the method embodiment shown in FIG. 3. The implementation principles thereof are similar, which are not repeated again herein.

The present invention further provides a firewall device, which includes a memory and a processor, where the memory is configured to store an instruction; and the processor is coupled with the memory, where the processor is configured to execute the instruction stored in the memory, and the processor is configured to execute the technical solutions in the method embodiments shown in any one of FIG. 11a to FIG. 1f or execute the technical solution of the method embodiment shown in FIG. 3. The implementation principles thereof are similar, which are not repeated again herein.

Persons of ordinary skill in the art may understand that all or a part of the steps in each of the foregoing method embodiments may be implemented by a program instructing relevant hardware. The foregoing program may be stored in a computer readable storage medium. When the program is run, the steps of the forgoing methods in the embodiments are performed. The storage medium includes any medium that is capable of storing program codes, such as a ROM, a RAM, a magnetic disk, or an optical disk.

Finally, it should be noted that the foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof; such modifications or replacements do not make the essence of corresponding technical solutions depart from the scope of the technical solutions of the embodiments of the present invention.

## Claims

1. An anti-virus method, comprising:
receiving, by a first thread, data packets belonging to the same data stream and transmitted in a network, and sequentially buffering payload data of data packets bearing file content among the received data packets into a first queue;
reading, by a second thread, payload data of at least one data packet from a start position of the first queue, and determining, according to the read payload data, whether payload data in the first queue is file content of a compressed file;
identifying, by the second thread, a compressed format of the compressed file, if it is determined that the payload data in the first queue is the file content of the compressed file; and
querying, by the second thread, a decompression algorithm corresponding to the identified compressed format from a mapping between a compressed format and a decompression algorithm; by using the queried decompression algorithm, reading payload data of data packets one by one from the first queue, and performing decompression processing separately on payload data that is read each time; and performing anti-virus detection separately on file content that is obtained after each time of decompression processing.

2. The anti-virus method according to claim 1, wherein the reading, by the second thread, the payload data of the at least one data packet from the start position of the first queue comprises:
when a preset condition is met, reading, by the second thread, the payload data of the at least one data packet from the start position of the first queue, wherein the preset condition comprises that the second thread is idle and payload data of at least a preset quantity of data packets exists in the first queue.

3. The anti-virus method according to claim 1 or 2, wherein before the sequentially buffering the payload data of the data packets bearing the file content among the received data packets into the first queue, the method further comprises:
obtaining content of a preset feature field in a packet header part of the data packet, comparing the obtained content of the preset feature field with a preset value, and if consistent, determining that the data packet bears file content.

4. The anti-virus method according to claim 1 or 2, wherein the determining, according to the read payload data, whether the payload data in the first queue is the file content of the compressed file comprises:
determining, by the second thread, whether a specified position of the read payload data comprises a file name; and
if the file name is comprised, determining whether a preset extension set of the compressed file comprises an extension of the file name, and if the extension set of the compressed file comprises the extension of the file name, determining that the payload data in the first queue is the file content of the compressed file.

5. The anti-virus method according to claim 1, wherein the performing the decompression processing separately on the payload data that is read each time comprises:
according to the queried decompression algorithm and structural parameter information of the file, performing decompression processing separately on the payload data that is read each time, wherein
an obtaining manner of the structural parameter information comprises:
reading, according to an identifier of a first packet, payload data of the first packet from the first queue, and obtaining, from the read payload data, structural parameter information carried in a file header, wherein the identifier of the first packet is obtained by performing protocol parsing on the data packet before the payload data of the data packet is sequentially buffered into the first queue.

6. The anti-virus method according to claim 1, wherein after the performing the anti-virus detection separately on the file content that is obtained after each time of the decompression processing, the method further comprises:
sequentially buffering, by the second thread, a detection result of each time of anti-virus detection into a second queue; and
determining, by a third thread according to the detection result in the second queue, whether a file transmitted in the data stream is a virus file.

7. An anti-virus apparatus, comprising: a first execution module, a second execution module and a buffer module, wherein the first execution module comprises:
a receiving unit, configured to receive data packets belonging to the same data stream and transmitted in a network;
a buffer unit, configured to sequentially buffer payload data of data packets bearing file content among the data packets received by the receiving unit into a first queue in the buffer module; and
the second execution module comprises:
a read unit, configured to, when a preset condition is met, read payload data of at least one data packet from a start position of the first queue;
a determination unit, configured to determine, according to the payload data read by the read unit, whether payload data in the first queue is file content of a compressed file;
an identification unit, configured to identify a compressed format of the compressed file, if the determination unit determines that the payload data in the first queue is the file content of the compressed file;
a decompression unit, configured to query a decompression algorithm corresponding to the identified compressed format from a mapping between a compressed format and a decompression algorithm; and by using the queried decompression algorithm, read payload data of data packets one by one from the first queue, and perform decompression processing separately on payload data that is read each time; and
a detection unit, configured to perform anti-virus detection separately on file content that is obtained after each time of decompression processing of the decompression unit.

8. The anti-virus apparatus according to claim 7, wherein the buffer unit is specifically configured to obtain content of a preset feature field in a packet header part of the data packet, compare the obtained content of the preset feature field with a preset value, and if consistent, determine that the data packet bears file content, and sequentially buffer the payload data of the data packets bearing the file content into the first queue.

9. The anti-virus apparatus according to claim 7 or 8, wherein
the determination unit is specifically configured to determine whether a specified position of the read data comprises a file name; and
if the file name is comprised, determine whether a preset extension set of the compressed file comprises an extension of the file name, and if the extension set of the compressed file comprises the extension of the file name, determine that the payload data in the first queue is the file content of the compressed file.

10. The anti-virus apparatus according to claim 7, wherein the decompression unit is specifically configured to query a decompression algorithm corresponding to the identified compressed format from a mapping between a compressed format and a decompression algorithm; by using the queried decompression algorithm, read the payload data of the data packets one by one from the first queue, and according to the queried decompression algorithm and structural parameter information of the file, perform decompression processing separately on the payload data that is read each time, wherein
an obtaining manner of the structural parameter information comprises:
reading, according to an identifier of a first packet, payload data of the first packet from the first queue, and obtaining, from the read payload data, structural parameter information carried in a file header, wherein the identifier of the first packet is obtained by performing protocol parsing on the data packet before the payload data of the data packet is sequentially buffered into the first queue.

11. The anti-virus apparatus according to claim 7 or 8, wherein the second execution module is further configured to sequentially buffer a detection result of each time of anti-virus detection into a second queue in the buffer module; and
the apparatus further comprises:
a third execution module, configured to determine, according to the detection result in the second queue, whether a file transmitted in the data stream is a virus file.

12. A firewall device, comprising: a memory, configured to store an instruction; and
a processor, coupled with the memory, wherein the processor is configured to execute the instruction stored in the memory, and the processor is configured to execute the anti-virus method according to any one of claims 1 to 6.
